Europäisches Patentamt

European Patent Office

Office européen des brevets

(19)

(11) EP 0 689 670 B1

(12) EUROPÄISCHE PATENTSCHRIFT

(45) Veröffentlichungstag und Bekanntmachung des Hinweises auf die Patenterteilung:
20.05.1998 Patentblatt 1998/21

(51) Int Cl.⁶: G01L 21/12

(21) Anmeldenummer: 94909046.8

(22) Anmeldetag: 25.02.1994

(86) Internationale Anmeldenummer:
PCT/EP94/00534

(87) Internationale Veröffentlichungsnummer:
WO 94/21994 (29.09.1994 Gazette 1994/22)

(54) **WÄRMELEITUNGSVAKUUMMETER MIT MESSZELLE, MESSGERÄT UND VERBINDUNGSKABEL**

HEAT CONDUCTANCE VACUUM GAUGE WITH MEASURING CELL, MEASURING INSTRUMENT AND CONNECTING CABLE

VACUOMETRE A CONDUCTIBILITE THERMIQUE AVEC CELLULE DE MESURE, APPAREIL DE MESURE ET CABLE DE CONNEXION

(84) Benannte Vertragsstaaten:
CH DE FR GB IT LI

(30) Priorität: 17.03.1993 DE 4308433

(43) Veröffentlichungstag der Anmeldung:
03.01.1996 Patentblatt 1996/01

(73) Patentinhaber: Balzers und Leybold Deutschland Holding Aktiengesellschaft
63450 Hanau (DE)

(72) Erfinder:
• ENDERES, Rolf
  D-52222 Stolberg (DE)
• SCHOROTH, Anno
  D-53639 Königswinter (DE)

(74) Vertreter: Leineweber, Jürgen, Dipl.-Phys.
Aggerstrasse 24
50859 Köln (DE)

(56) Entgegenhaltungen:
EP-A- 0 202 547

## Beschreibung

Die Erfindung bezieht sich auf ein Verfahren zum Betrieb eines geregelten Wärmeleitungsvakuummeters mit einer Meßzelle, die eine Wheatstone'sche Brücke mit Speisespannungsund Meßspannungsabgriffen umfaßt, einem Versorgungs- und Meßgerät sowie einem mehrere Leitungen enthaltenden Verbindungskabel. Außerdem bezieht sich die Erfindung auf für die Durchführung dieses Verfahrens geeignete Schaltungen.

Wärmeleitungsvakuummeter nutzen die Tatsache aus, daß von einem temperaturabhängigen Widerstandselement bei höheren Gasdrücken, also größerer Teilchenzahldichte, mehr Wärme abgeführt wird als bei niedrigeren Gasdrücken. Beim Wärmeleitungsvakuummeter nach Pirani ist das temperaturabhängige Widerstandselement ein Meßdraht, der in eine Wheatstone'sche Brücke eingeschaltet ist. Beim ungeregelten Pirani-Vakuummeter bewirkt eine Widerstandsänderung des Meßdrahtes eine Verstimmung der Brücke, welche als Maß für den Druck herangezogen wird. Beim geregelten Pirani wird die an der Brücke liegende Speisespannung ständig derart geregelt, daß der Widerstand und damit die Temperatur des Meßdrahtes unabhängig von der Wärmeabgabe konstant bleiben. Der zur Konstanthaltung des Widerstandswertes benötigte Strom ist ein Maß für die Wärmeleitfähigkeit und damit für den Druck des Gases. Üblicherweise wird die Wheatstone'sche Brücke durch Nachführen der Brückenspeisespannung auf minimale Verstimmung abgeglichen. Die Brückenspeisespannung ist damit der zum Druck korrespondierende primäre elektrische Wert.

Bei Wärmeleitungsvakuummetern besteht häufig die Notwendigkeit, Meßzelle und Meßgerät räumllich weit voneinander entfernt betreiben zu müssen. Dazu ist es erforderlich, Meßzelle und Meßgerät über ein entsprechend langes Kabel miteinander zu verbinden. Bei längeren Kabeln haben die Leitungen, die Bestandteil des Kabels sind und in der Regel gleiche elektrische Eigenschaften haben, nicht mehr zu vernachlässigende Widerstände. Die im Meßgerät erzeugte, der Nachführung der Brückenspeisespannung dienende Spannung, die auch als Meßwert verwendet wird, entspricht deshalb wegen des Spannungsabfalls auf den Verbindungsleitungen nicht mehr der tatsächlichen Brückenspeisespannung. Daraus resultiert ein Meßfehler, der mit steigender Länge des Verbindungskabels zunimmt. Ursache weiterer Meßfehler sind Temperatur- und damit Widerstandsänderungen der Leitungen des Verbindungskabels.

Bei Wärmeleitungsvakuummetern nach dem Stand der Technik wird nach der Herstellung der Verbindung zwischen Meßzelle und Meßgerät manuell ein Leitungslängenabgleich vorgenommen. Entweder werden dazu eine der Brückenspannung und, der Kabellänge proportionale Spannung oder - bei mikroprozessor-gesteuerten Geräten - die Kabellänge selbst eingegeben. Die eingegebenen Werte werden dann bei der Bildung des Druckmeßwertes berücksichtigt. Ein Leitungslängenabgleich dieser Art muß nach jedem Kabelwechsel erneut - manuell - durchgeführt werden. Die Meßfehler, die von temperatur- bzw. betriebsbedingten Widerstandsschwankungen des Verbindungskabels und der Brücke verursacht werden, bleiben dabei unberücksichtigt.

Zum Stand der Technik gehört der Inhalt der EP-A-202 547. Daraus ist ein Meßkopf für ein Wärmeleitungsvakuummeter oder ein ähnliches Gerät bekannt. Im Meßkopf befindet sich eine Wheatstone'sche Brücke. Über mehrere Leitungen steht der Meßkopf mit einer Speisespannungsquelle und einem Anzeigegerät in Verbindung. Auf Meßfehler, die mit steigender Länge der Verbindungsleitungen zunehmen, und deren Beseitigung wird in der genannten Schrift nicht eingegangen.

Der vorliegenden Erfindung liegt die Aufgabe zugrunde, die erwähnten Meßfehler zu vermeiden und außerdem den Leitungslängenabgleich zu automatisieren.

Erfindungsgemäß wird diese Aufgabe bei einem Verfahren der eingangs erwähnten Art dadurch gelöst, daß die Spannung eines Speisespannungsabgriffes der in der Meßzelle befindlichen Wheastone'schen Brücke über eine der Leitungen des Verbindungskabels stromlos registriert, daraus die über den Leitungen abfallende Spannung ($U_L$) als Signal zum Leitungslängenabgleich ermittelt und bei der Meßwertbildung berücksichtigt wird. Die stromlose Registrierung des Spannungswertes eines der beiden Spannungsabgriffe erlaubt die Berechnung des Widerstandes einer Leitung des Verbindungskabels oder zumindest die Bildung eines Spannungswertes $U_L$, der dem Widerstand der Verbindungsleitung entspricht. Nach der Gleichung

$$(\text{Gl.1}) \qquad U_{Br} = U'_{Br} - 2 \times U_L$$

kann die tatsächliche Brückenspeisespannung $U_{Br}$ aus $U'_{Br}$ (im Meßgerät erzeugte Brückenspeisespannung) und $U_L$ ermittelt werden. Erfolgt die Meßwertbildung beispielsweise mit Hilfe eines Mikroprozessors oder einer geeigneten Analogschaltung, dann kann der Wert $U_L$ laufend bei der Meßwertbildung entsprechend der angegebenen Gleichung berücksichtigt werden. Mit einem Kabelwechsel oder mit Temperaturänderungen verbundene Widerstandsänderungen der Verbindungsleitungen werden automatisch berücksichtigt. Besondere manuelle Maßnahmen sind nicht mehr erforderlich.

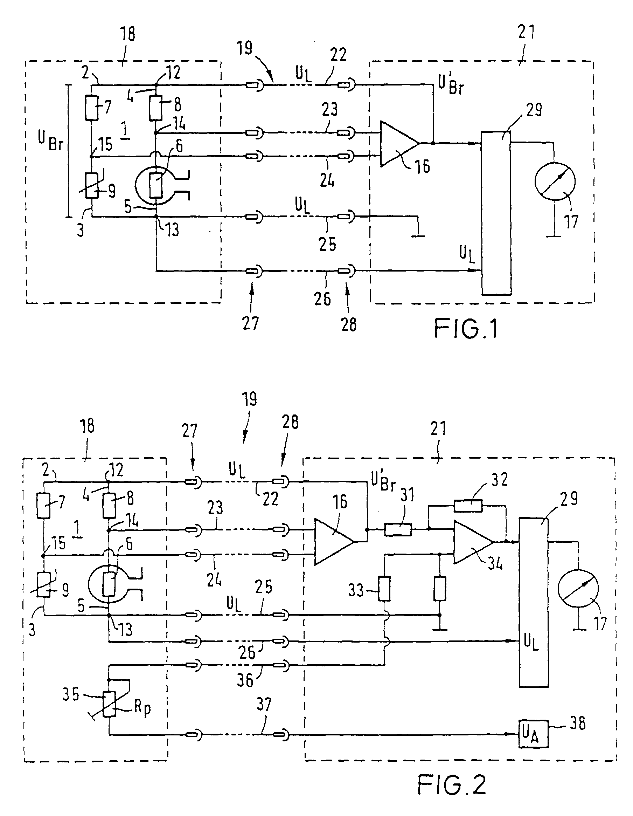

Weitere Vorteile und Einzelheiten der Erfindung sollen anhand von in den Figuren 1 bis 6 dargestellten Ausführungsbeispielen erläutert werden.

Die in Figur 1 dargestellte Schaltung umfaßt die Wheatstone'sche Brücke 1 mit ihren Zweigen 2 bis 5. In diesen Zweigen befinden sich der Meßdraht 6 und die Widerstände 7 bis 9. Zwischen den Zweigen befinden sich die Abgriffe 12 bis 15, wobei die Abgriffe 12, 13 die Speisediagonale und die Abgriffe 14, 15 die Meßdiagonale bilden. An den Angriffen 12 und 13 liegt die geregelte Speisespannung $U_{Br}$ an, wobei Angriff 13 auf Erdpotential liegt. Die Abgriffe 14, 15 der Meßdiagonalen sind mit dem Verstärker 16 verbunden, mit dessen Hilfe die Speisespannung ständig derart geregelt wird, daß der Widerstand des Meßdrahtes (und damit seine Temperatur) unabhängig von der Wärmeabgabe konstant bleibt. Zur Anzeige des Druckes, der der Speisespannung entspricht, ist in bekannter Weise das Anzeigegerät 17 vorgesehen.

Der Widerstand 9 ist in an sich bekannter Weise temperaturabhängig ausgebildet. Dadurch besteht die Möglichkeit, störende Temperatureinflüsse des Meßdrahtes 6 zu kompensieren.

Die Wheatstone'sche Brücke 1 mit ihrem in einem geeigneten Gehäuse angeordneten Meßdraht 6 bilden den Drucksensor bzw. die Meßzelle 18. Die weiteren nicht sämtlich dargestellten Bauteile (Versorgung, Verarbeitung, Anzeige 17 usw.) sind Bestandteil eines mit der Meßzelle 18 über ein mehradriges Kabel 19 verbundenen Meßgerätes 21. Das Kabel 19 umfaßt die Verbindungsleitungen 22 bis 26 und ist jeweils über Steckverbindungen 27, 28 mit dem Sensor bzw. dem Meßgerät 21 lösbar verbunden. Die Verbindungsleitungen 23, 24 verbinden die Abgriffe 14, 15 der Meßdiagonalen mit dem Verstärker 16. Bei einer Verstimmung der Brücke 1 wird die Speisespannung $U_{Br}$ derart nachgeführt, daß die Brücke wieder abgestimmt wird. Die Verbindungsleitungen 22, 25 dienen der Versorgung der Brücke 1. Durch sie fließt der Brückenspeisestrom I. Bei längeren Verbindungskabeln ist der Widerstand der Verbindungsleitungen nicht mehr vernachlässigbar. Über diesen Leitungen fällt deshalb die Spannung $U_L$ ab. Die tat-sächlich über die Brücke 1 abfallende Spannung $U_{Br}$ entspricht deshalb nicht mehr der im Meßgerät 21 erzeugten Brückenspeisespannung $U'_{Br}$. Es gilt die bereits oben erwähnte Beziehung zwischen $U_{Br}$, $U'_{Br}$ und $U_L$ (Gl. 1).

Beim Ausführungsbeispiel nach Fig. 1 ist eine weitere, mit den übrigen Verbindungsleitungen 22 bis 25 identische Verbindungsleitung 26 vorhanden, welche den Speisespannungsabgriff 13 mit dem Meßgerät 21 verbindet. Der Speisespannungsabgriff 13 liegt wegen der über der Leitung 25 abfallenden Spannung $U_L$ nicht auf Erdpotential. Über die Leitung 26 erfolgt stromlos die Registrierung oder Messung der Spannung bei 13. Mit 29 ist ein Mikroprozessor oder eine Analogschaltung bezeichnet, in welchem die Meßwertverarbeitung stattfindet. Als Korrekturwert wird die Spannung $U_L$ eingegeben. Der Mikroprozessor oder die Analogschaltung berücksichtigt $U_L$ entsprechend Gleichung 1, so daß statt der im Meßgerät erzeugten Brückenspeisespannung $U'_{Br}$ die tatsächliche Brückenspeisespannung $U_{Br}$ angezeigt werden kann.

$U_L$ kann auch durch stromlose Messung der Spannung am Speisespannungsabgriff 12 bestimmt werden. $U_L$ ergibt sich dann aus der Differenz der bei 12 gemessenen Spannung und der im Meßgerät erzeugten Speisespannung $U'_{Br}$.

Bei der Schaltung nach Figur 2 sind zusätzlich Bauteile vorgesehen, die eine Nullpunktkorrektur des Meßfadens 6 ermöglichen. Diese Bauteile umfassen einen im Meßgerät 21 befindlichen, zwischen dem Regler 16 und dem Mikroprozessor 29 angeordneten Verstärker - bestehend aus den Widerständen 31, 32, 33 und dem Verstärker 34 - und einem im Sensor 18 befindlichen, einstellbaren Widerstand 35 $R_P$. Über die Leitung 36 sind eine Seite des Widerstandes 35 und der Verstärker miteinander verbunden. An die andere Seite des Widerstandes 35 wird über die Leitung 37 eine Abgleichsspannung $U_A$ (Bauteil 38 im Meßgerät) gelegt. Die Nullpunktkorrektur erfolgt in der Weise, daß der Widerstand 35 so lange verstellt wird, bis bei einem Druck 0 der Wert 0 angezeigt wird. Die eingestellte Korrekturspannung wird über die Leitung 36 in das Meßgerät übertragen und mit Hilfe des Reglers dem Meßwert überlagert.

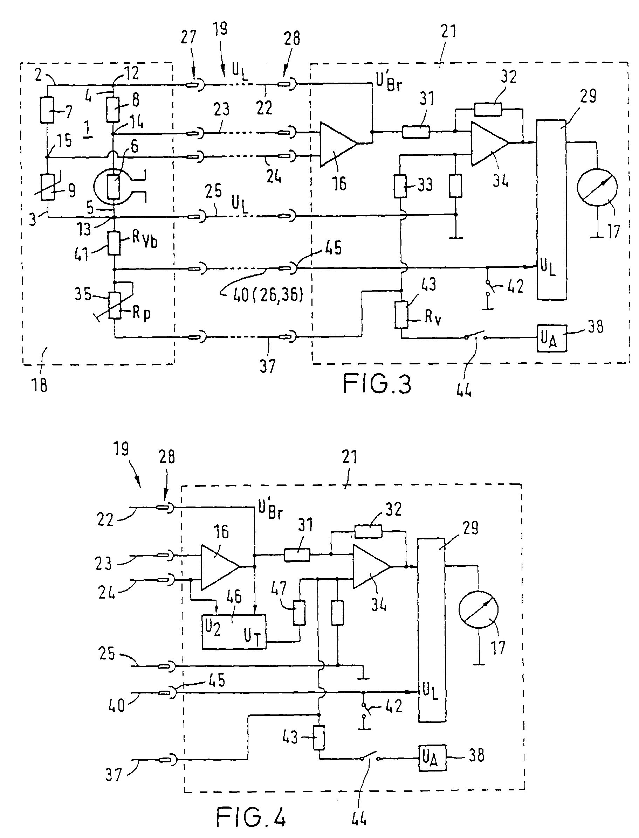

Die Schaltung nach Figur 3 entspricht der Schaltung nach Figur 2. Es sind jedoch der Leitungswiderstandsabgleich und die Nullpunktkorrektur derart kombiniert, daß eine Verbindungsleitung entfallen ist, d.h., eine der Verbindungsleitungen für zwei Funktionen genutzt werden kann. Dazu ist der Speisespannungsabgriff 13 über den Widerstand 41 ($R_{Vb}$) mit dem Widerstand 35 verbunden. Die Leitungen 26, 36 sind zu einer Leitung 40 zusammengefaßt. Weiterhin ist der Schalter 42 vorgesehen, mit dem die gemeinsame Leitung 40 (26, 36) meßgeräteseitig auf Erdpotential gelegt werden kann. Schließlich befinden sich der Widerstand 43 ($R_V$) und ein Schalter 44 zwischen der Leitung 37 und dem der Erzeugung der Abgleichspannung $U_A$ dienenden Bauteil 38.

Zur Messung des Spannungsabfalles auf den Versorgungsleitungen der Brücke muß der Schalter 42 geöffnet sein. Der Versorgungsstrom der Brücke fließt über die Leitung 25 zur Masse des Meßgerätes. Über den Widerstand 41 und die Leitung 40 steht der Speisespannungsabgriff 13 mit dem Meßgerät 21 in Verbindung, so daß man meßgeräteseitig eine dem Spannungsabfall auf der Masseleitung gleiche bzw. proportionale Spannung stromlos messen kann. Hierbei sind zwei Fälle zu unterscheiden:

a) Sind die Schalter 42 und 44 geöffnet, so ist die bei 45 (meßgeräteseitiger Punkt der Leitung 40) gemessene Spannung gleich dem Spannungsabfall $U_L$ auf der Masseleitung.

b) Ist der Schalter 42 offen und der Schalter 44 geschlossen, so ist die Spannung bei 45 abhängig vom Spannungsabfall auf der Masseleitung und vom Spannungsabfall über dem Widerstand 41 aufgrund der Stellung des Potentiometers 35 für den Nullabgleich. In diesem Fall muß zuerst der Widerstand 35 berechnet werden. Dieser kann mit ausreichender Genauigkeit nach der folgenden Gleichung berechnet werden, wenn die beiden Schalter 42 und 44 geschlossen sind:

$$\text{(Gl. 2)} \qquad \frac{U_{RP}}{U_A} = \frac{U_o}{U_A} = \frac{R_p}{R_v + R_p}$$

($U_o$ = Nullspannung) Dabei wird vorausgesetzt, daß $R_v + R_{vb} >> R_L$ (Widerstand der Leitungen).

Aus Gleichung 2 kann $R_p$ berechnet werden. Da der Widerstand $R_p$ jetzt bekannt ist, kann die Spannung aufgrund des Spannungsabfalls auf der Masseleitung berechnet werden.

$$U_L = U_{(bei\ 45)} - U_A/(R_v+R_p+R_{vb}) \times R_{vb}.$$

Nachdem der Spannungsabfall auf der Masseleitung bekannt ist, kann die Brückenspannung $U_{Br}$ aus Gleichung 1 berechnet werden.

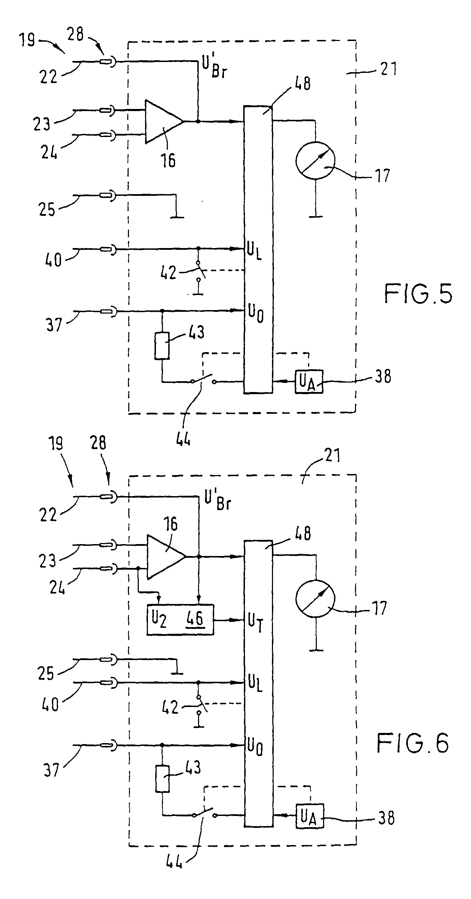

Während der Messung des Nullabgleichs muß der Schalter 44 geschlossen sein. Der Schalter 42 kann offen oder geschlossen sein. Ist er geschlossen, dann liegt nach dem Anlegen der Spannung $U_A$ und in Abhängigkeit von der Einstellung des Widerstandes 35 die Leitung 37 auf einer der "Nullspannung" $U_o$ proportionalen Spannung. Dieser Spannungswert wird auf den Addierer mit dem Verstärker 34 gegeben oder - vgl. Figur 5 - einer Software zugeführt, die die Nullspannung bei der Meßwertverarbeitung berücksichtigt. Ist der Schalter 42 offen, muß zur Berechnung der Spannung $U_o$ der Spannungsabfall über $R_{vb}$ berücksichtigt werden.

Der Widerstand 41 als Verbindung zwischen dem Abgriff 13 und dem Widerstand 35 ist notwendig, wenn erfindungsgemäße Meßzellen 18 mit bereits auf dem Markt befindlichen Meßgeräten 21 kompatibel sein sollen. Bei angepaßten Meßgeräten kann die Verbindung zwischen Abgriff 13 und Widerstand 35 auch ein Kurzschluß sein. In diesem Fall muß während des Nullabgleichs der Schalter 44 geschlossen sein. Die Stellung des Schalters 42 ist beliebig.

Fig. 4 zeigt eine Ausführungsform für das Meßgerät 21, das weitgehend der Ausführungsform nach Fig. 3 entspricht. Zusätzlich ist eine Temperaturkompensation vorgesehen, die aus dem Baustein 46 und dem Widerstand 47 besteht. Dem Baustein 46 wird die Spannung $U_{Br}$ und die Spannung $U_2$ (Spannungabfall über Widerstand 9) des Meßdiagonalenabgriffes 15 zugeführt. Aus diesen Werten wird im Baustein 46 ein dem Wert des temperaturabhängigen Widerstandes 9 entsprechender Spannungswert $U_T$ gebildet, und zwar nach der Formel

$$U_T = \frac{U_2}{U_{Br} - U_2} \cdot k$$

k = Proportionalitätsfaktor

Dadurch besteht die Möglichkeit, laufend Korrektursignale zu erzeugen, die die Temperaturabhängigkeit berücksichtigen und deshalb zur Bildung exakter Meßwerte herangezogen werden können, indem sie über den Widerstand 47 auf den Regler mit dem Verstärker 34 gegeben werden.

Bei den Ausführungsbeispielen nach den Figuren 5 und 6 ist ein Computerbaustein 48 vorgesehen, der der Meßwertverarbeitung unter Berücksichtigung der Korrekturwerte $U_L$, $U_o$ und $U_2$ (nur Fig. 6) dient. Zusätzlich hat der Baustein 48 Steuerfunktionen, indem er zu den gewünschten Zeitpunkten den Nullabgleich und den Leitungswiderstandsabgleich veranlaßt. Durch gestrichelte Linien ist angedeutet, daß vom Baustein 48 das Öffnen und Schließen der von Transistoren gebildeten Schalter 42, 44 und das Anlegen der Abgleichspannung $U_A$ veranlaßt wird. Die mit dem beschriebenen Gerät durchgeführten Druckmessungen sind trotz veränderter Kabellängen, sich ändernder Kabeltemperaturen und - falls eine Temperaturkompensation der beschriebenen Art vorgesehen ist - störender Temperatureinflüsse auf den Meßdraht im gesamten Meßbereich weitestgehend meßfehlerfrei.

**Patentansprüche**

1. Verfahren zum Betrieb eines geregelten Wärmeleitungsvakuummeters mit einer Meßzelle (18), die eine Wheatstone'sche Brücke (1) mit Speisespannungsabgriffen (12,13) und Meßspannungs abgriffen (14,15) umfaßt, einem Versorgungs- und Meßgerät (21) sowie einem mehrere Leitungen enthaltenden Verbindungskabel (19), <u>dadurch gekennzeichnet,</u> daß die Spannung eines Speisespannungsabgriffes (12, 13) der in der Meßzelle (18) befindlichen Wheatstone'schen Brücke (1) über eine (26) der Leitungen des Verbindungskabels (19) stromlos registriert, daraus die über den Leitungen (22 bis 26) abfallende Spannung ($U_L$) als Signal zum Leitungslängenabgleich ermittelt und bei der Meßwertbildung berücksichtigt wird.

2. Verfahren nach Anspruch 1, <u>dadurch gekennzeichnet,</u> daß über zwei weitere Leitungen (36, 37) des Verbindungskabels eine Nullpunktkorrektur vorgenommen wird, indem ein verstellbarer Widerstand (35) in der Meßzelle, der über die beiden Leitungen (36, 37) zum einen mit einer Ausgleichspannung $U_A$ versorgt wird und zum anderen mit dem Eingang eines Meßsignal-Verstärkers (34) verbunden ist, so lange verstellt wird, bis bei einem Druck 0 der Wert 0 angezeigt wird.

3. Verfahren nach Anspruch 2, <u>dadurch gekennzeichnet,</u> daß die der stromlosen Messung der Spannung eines Speisespannungsabgriffes (12, 13) dienende Leitung (26) des Verbindungskabels (19) auch für die Nullpunktkorrektur verwendet wird.

4. Verfahren nach Anspruch 1 oder 3, dadurch gekennzeichnet, daß der Wert oder die Temperatur eines temperaturabhängigen Widerstandes (9), der Bestandteil der Meßbrücke (1) ist, ermittelt wird und daß ein entsprechendes Signal als temperaturabhängiges Korrektursignal bei der Meßwertbildung berücksichtigt wird.

5. Verfahren nach einem der Ansprüche 1 bis 4, dadurch gekennzeichnet, daß die Signale zum Leitungslängenabgleich, zur Nullpunktkorrektur und/oder zur Temperaturkompensation dem Eingang eines Meßsignal-Verstärkers (34) oder einem der Meßwertverarbeitung dienenden Computerbaustein (48) zugeführt werden.

6. Schaltung zur Durchführung eines Verfahrens zum Betrieb eines geregelten Wärmeleitungsvakuummeters mit einer Meßzelle (18), die eine Wheatstone'sche Brücke (1) mit Speisespannungsabgriffen (12,13), und Meßspannungsabgriffen (14,15) umfaßt, einem Versorgungs- und Meßgerät (21) sowie einem mehrere Leitungen enthaltenden Verbindungskabel (19), dadurch gekennzeichnet, daß neben den der Versorgung der Brücke (1) und der Übertragung des Meßsignals dienenden Leitungen (22 bis 25) eine weitere Verbindungsleitung (26) vorgesehen ist, die der stromlosen Messung des Spannungswertes eines Speisespannungsabgriffes (12, 13) dient.

7. Schaltung nach Anspruch 6 zur Durchführung des Verfahrens nach Anspruch 3, dadurch gekennzeichnet, daß die Meßzelle (18) zusätzlich einen verstellbaren Widerstand (35) zur Nullpunktkorrektur enthält, der vom Meßgerät (21) mit einer Ausgleichsspannung ($U_A$) versorgt wird, und daß eine zweite weitere Leitung (37) vorgesehen ist, die zusammen mit der ersten weiteren Leitung (40) der Übertragung sowohl von Nullpunktkorrektursignalen als auch von Leitungslängenabgleichsignalen dient.

8. Schaltung nach Anspruch 7, dadurch gekennzeichnet, daß den weiteren Leitungen (37, 40) meßgeräteseitig Schalter (42, 44) zugeordnet sind, mit deren Hilfe Schaltungszustände herbeigeführt werden, die entweder die Nullpunktkorrektur oder den Leitungslängenabgleich ermöglichen.

9. Schaltung nach einem der Ansprüche 6 bis 8, dadurch gekennzeichnet, daß die Wheatstone'sche Brücke in der Meßzelle (18) einen temperaturabhängigen Widerstand (9) enthält und daß im Meßgerät (21) Mittel (46) zur Ermittlung der über diesem temperaturabhängigen Widerstand (9) abfallenden Spannung ($U_2$) zur Bildung eines Signales zur Temperaturkompensation vorhanden sind.

10. Schaltung nach Anspruch 9, dadurch gekennzeichnet, daß ein Meßsignal-Verstärker (34) oder ein Computerbaustein (48) vorgesehen ist, dem die dem Leitungslängenabgleich, der Nullpunktkorrektur und/oder der Temperaturkompensation dienenden Signale zugeführt werden.

## Claims

1. Method of operating a controlled heat-conduction vacuum meter comprising a measuring cell (18), which comprises a Wheatstone bridge (1) with supply voltage taps (12, 13) and measurement voltage taps (14, 15), a power supply and measuring device (21) and a connecting cable (19) comprising a plurality of lines, characterised in that the voltage of a supply voltage tap (12, 13) of the Wheatstone bridge (1) located in the measuring cell (18) registers currentless via one (26) of the lines of the connecting cable (19), from this the voltage ($U_L$) decreasing via the lines (22 to 26) is determined as a signal for line length compensation and is taken into account in the formation of a measured value.

2. Method according to claim 1, characterised in that via two further lines (36, 37) of the connecting cable zero offset compensation is carried out, in that an adjustable resistance (35) in the measuring cell, which resistance is supplied on the one hand via the two lines (36, 37) with a compensation voltage $U_A$ and on the other hand is connected to the input of a measuring signal amplifier (34), is adjusted until at a pressure of 0 the value 0 is indicated.

3. Method according to claim 2, characterised in that the line (26) of the connecting cable (19) for the currentless measurement of the voltage of a supply voltage tap (12, 13) is also used for zero offset compensation.

4. Method according to claim 1 or 3, characterised in that the value or the temperature of a temperature-dependent resistance (9), which is a component of the measuring bridge (1), is detected and in that a corresponding signal is taken into account as a temperature-dependent compensation signal in the formation of a measured value.

5. Method according to one of claims 1 to 4, characterised in that the signals for line length compensation, zero offset compensation and/or temperature compensation are fed to the input of a measuring signal amplifier (34) or to a computer component (48) for measured value processing.

**6.** Circuit for carrying out a method for operating a controlled heat conducting vacuum meter comprising a measuring cell (18), which comprises a Wheatstone bridge (1) with supply voltage taps (12, 13) and measuring voltage taps (14, 15), as well as comprising a power supply and measuring device (21) and a connecting cable (19) comprising a plurality of lines, <u>characterised in that</u> in addition to the lines (22 to 25) for the power supply to the bridge (1) and transmission of the measuring signal, a further connecting line (26) is provided, which is for the currentless measurement of the voltage value of a supply voltage tap (12, 13).

**7.** Circuit according to claim 6 for carrying out the method according to claim 3, <u>characterised in that</u> the measuring cell (18) additionally comprises an adjustable resistance (35) for zero offset compensation, which receives a power supply from the measuring device (21) with a compensating voltage ($U_A$) and in that a second further line (37) is provided, which together with the first further line (40) is for transmitting both zero offset compensation signals as well as line length compensation signals.

**8.** Circuit according to claim 7, <u>characterised in that</u> switches (42, 44) on the measuring device side are allocated to the further lines (37, 40) and by means thereof circuit conditions can be produced which permit zero offset compensation or line length compensation.

**9.** Circuit according to one of claims 6 to 8, <u>characterised in that</u> the Wheatstone bridge in the measuring cell (18) comprises a temperature-dependent resistance (9) and in that in the measuring device (21) means (46) are provided for determining the voltage ($U_2$) decreasing via this temperature-dependent resistance (9) for the formation of a signal for temperature compensation.

**10.** Circuit according to claim 9, <u>characterised in that</u> a measuring signal amplifier (34) or a computer component (48) is provided, to which the signals for line length compensation, zero offset compensation and/or temperature compensation are supplied.

**Revendications**

**1.** Procédé de fonctionnement d'une jauge à vide à conduction thermique régulée équipée d'une cellule de mesure (18), qui comprend un pont de Wheatstone (1) avec des prises de tension d'alimentation (12, 13) et des prises de tension de mesure (14, 15), d'un appareil d'alimentation et de mesure (21) ainsi que d'un câble de liaison (19) contenant plusieurs lignes, caractérisé en ce que la tension d'une prise de tension d'alimentation (12, 13) du pont de Wheatstone (1) se trouvant dans la cellule de mesure (18) est enregistrée sans courant par l'intermédiaire d'une (26) des lignes du câble de liaison (19), la chute de tension ($U_L$) dans les lignes (22 à 26) est détectée en tant que signal de compensation de longueur de ligne et est prise en compte lors de la formation de la valeur de mesure.

**2.** Procédé selon la revendication 1, caractérisé en ce que, par l'intermédiaire de deux autres lignes (36, 37) du câble de liaison, est effectuée une correction de point zéro, dans lequel une résistance réglable (35) dans la cellule de mesure, qui est alimentée par l'intermédiaire des deux lignes (36, 37) d'une part par une tension de compensation $U_A$, et est reliée d'autre part à l'entrée d'un amplificateur de signal de mesure (34), est réglée jusqu'à ce que, pour une pression 0, la valeur 0 soit indiquée.

**3.** Procédé selon la revendication 2, caractérisé en ce que la ligne (26) du câble de liaison (19), servant à la mesure sans courant de la tension d'une prise de tension d'alimentation (12, 13), est utilisée également pour la correction de point zéro.

**4.** Procédé selon la revendication 1 ou 3, caractérisé en ce que la valeur ou la température d'une résistance (9) fonction de la température, qui fait partie du pont de mesure (1), est détectée et en ce qu'un signal correspondant est pris en compte en tant que signal de correction en fonction de la température lors de la formation de la valeur de mesure.

**5.** Procédé selon l'une quelconque des revendications 1 à 4, caractérisé en ce que les signaux de compensation de longueur de ligne, de correction de point zéro et/ou de compensation thermique sont appliqués à l'entrée d'un amplificateur de signal de mesure (34) ou d'un composant de calculateur (48) servant au traitement de la valeur de mesure.

**6.** Circuit en vue de la mise en oeuvre d'un procédé de fonctionnement d'une jauge à vide à conduction thermique régulée comportant une cellule de mesure (18), qui comprend un pont de Wheatstone (1) avec des prises de tension d'alimentation (12, 13) et des prises de tension de mesure (14, 15), un appareil d'alimentation et de mesure (21) ainsi qu'un câble de liaison (19) contenant plusieurs lignes, caractérisé en ce qu'en plus des lignes (22 à 25) servant à l'alimentation du pont (1) et à la transmission du signal de mesure, une autre ligne de liaison (26) est prévue, qui sert à la mesure sans courant de la valeur de tension d'une prise de tension d'alimentation (12, 13).

**7.** Circuit selon la revendication 6 en vue de la mise en oeuvre du procédé selon la revendication 3, caractérisé en ce que la cellule de mesure (18) contient en outre une résistance réglable (35) en vue de la correction du point zéro, qui est alimentée par l'appareil de mesure (21) avec une tension de compensation ($U_A$), et en ce qu'une seconde autre ligne (37) est prévue, qui sert, conjointement avec la première autre ligne (40), à la transmission, non seulement de signaux de correction de point zéro, mais également de signaux de compensation de longueur de ligne.

**8.** Circuit selon la revendication 7, caractérisé en ce qu'aux autres lignes (37, 40) sont associés, côté appareil de mesure, des commutateurs (42, 44), à l'aide desquels sont appliqués des états de circuit, qui permettent soit la correction de point zéro, soit la compensation de longueur de ligne.

**9.** Circuit selon l'une quelconque des revendications 6 à 8, caractérisé en ce que le pont de Wheatstone dans la cellule de mesure (18) comporte une résistance (9) fonction de la température et en ce que, dans l'appareil de mesure (21), sont prévus des moyens (46) en vue de la détection de la chute de tension (U2) due à cette résistance (9) fonction de la température en vue de la formation d'un signal de compensation de température.

**10.** Circuit selon la revendication 9, caractérisé en ce qu'un amplificateur de signal de mesure (34) ou un composant de calculateur (48) est prévu, auquel sont appliqués les signaux servant à la compensation de longueur de ligne, à la correction de point zéro et/ou à la compensation de température.

FIG.1

FIG.2

8

EP 0 689 670 B1

FIG.3

FIG.4

9

FIG.5

FIG.6